# EUROPEAN PATENT SPECIFICATION

(11) **EP 0 554 057 B1**
(45) Date of publication and mention of the grant of the patent: **12.06.1996**
(21) Application number: 93300565.4
(22) Date of filing: 27.01.1993
(51) Int. Cl.: E04B 1/98, F16F 7/10

(54) **Vibration control device for structure**
Schwingungskontrollvorrichtung für Struktur
Dispositif de contrôle de vibrations pour structure

(30) Priority: 28.01.1992 JP 12743/92
(43) Date of publication of application: 04.08.1993
(73) Proprietor: Kajima Corporation, Tokyo 107 (JP)
(72) Inventor: Sakamoto, Mitsuo, Minato-ku, Tokyo 107 (JP); Koshika, Norihide, Minato-ku, Tokyo 107 (JP); Nishimura, Isao, Minato-ku, Tokyo 107 (JP); Sasaki, Katsuyasu, Minato-ku, Tokyo 107 (JP); Orui, Satoshi, Minato-ku, Tokyo 107 (JP)
(74) Representative: Godwin, Edgar James

(56) References cited:
- EP-A- 0 316 076
- WO-A-92/21840
- WO-A-92/21841
- PATENT ABSTRACTS OF JAPAN vol. 8, no. 201 (M-325)14 September 1984 & JP-A-59 89 848 (MITSUBISHI DENKI K.K.)
- PATENT ABSTRACTS OF JAPAN vol. 14, no. 121 (M-946)7 March 1990 & JP-A-13 18 671 (SHIMIZU CORP.)
- PATENT ABSTRACTS OF JAPAN vol. 14, no. 424 (M-1024)12 September 1990 & JP-A-21 67 969 (KAJIMA CORP.)
- PATENT ABSTRACTS OF JAPAN vol. 13, no. 130 (M-808)30 March 1989 & JP-A-63 297 837 (KAJIMA CORP.)

## Description

This invention relates to a vibration control device of an active type for reducing the response from a structure due to earthquake, wind or the like by applying a control force on the vibration control device.

A dynamic damper (designated as a DD thereafter) is available as a vibration control device of a passive type and there are some descriptions of an application thereof to structures, e.g., Japanese Pat. Laid-open No. 63-76932 and Japanese Pat. Publication No. 3-38686.

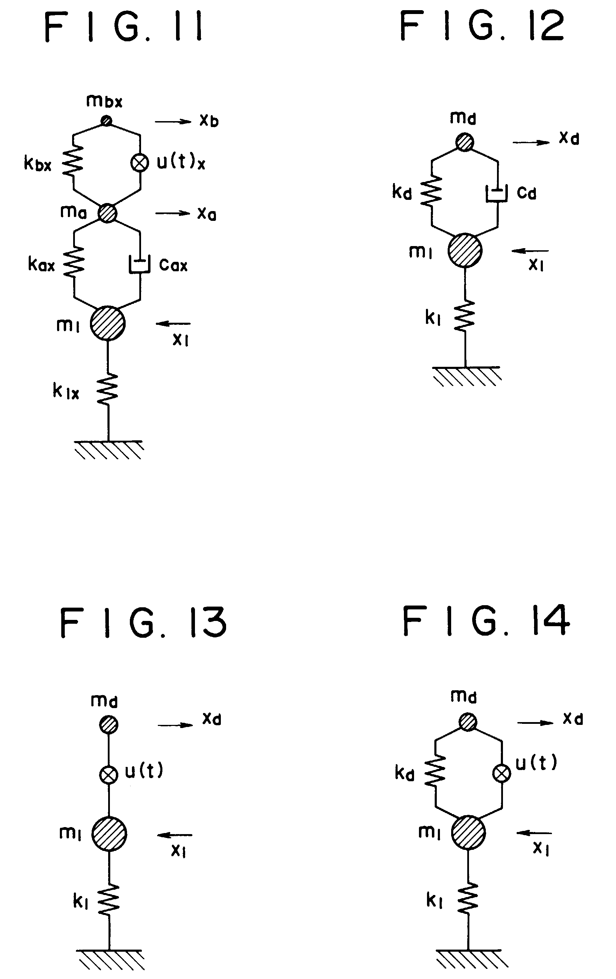

Fig. 12 shows a vibration model of a DD to be applied to a structure, wherein m₁ is a mass of a main body of the structure constituting a main vibration system and m_{d} is a mass of an additional mass body constituting a damping system. Also, k₁ is a spring constant of the main body of the structure. The main body of the structure having a mass m₁ and the additional mass body having a mass m_{d} are mutually connected through both a spring having a spring constant k_{d} and a damper having a damping coefficient c_{d}. Further, x₁ represents a displacement of the structure and x_{d} represents a displacement of a weight.

A natural angular frequency of the main vibration system is given by:${\text{ω}}_{\text{1}} {\text{= (k}}_{\text{1}} {\text{/m}}_{\text{1}} {\text{)}}^{\text{1/2}}$

In the DD, a mass m_{d} of the damping system is designed so that the ratio of the mass m_{d} to the mass m₁ of the main vibration system may be set to approximately become:${\text{µ = m}}_{\text{d}} {\text{/m}}_{\text{1}} \text{≥ 0.01}$

At this time, the natural angular frequency of the damping system is given by:${\text{ω}}_{\text{d}} {\text{= [1/(1 + µ)]ω}}_{\text{1}}$

A damping coefficient c_{d} and a damping factor h_{d} are represented by the following equations, respectively:${\text{c}}_{\text{d}} {\text{= 2 m}}_{\text{d}} {\text{ω}}_{\text{d}} {\text{h}}_{\text{d}}$${\text{h}}_{\text{d}} {\text{= [3µ/8(1 + µ)]}}^{\text{1/2}}$

There are some descriptions [designated as an AMD (i.e., the abbreviation of Active Mass Driver)] as an active type vibration control device, e.g., US. Pat. No. 5,022,201 (Japanese Pat. Laid-open Nos.1-275866, 1-275867, 1-275868 and 1-275869).

Fig. 13 shows a vibration model of an AMD, which applies a control force u(t) due to the hydraulic power or electromagnetic force of an actuator between the main body of the structure having a mass m₁ and the additional mass body having a mass m_{d} to actively control the vibration of the structure.

In the AMD, usually assuming that a spring between the main body of the structure and the additional mass body constituting a vibration control device is set under a soft condition, i.e., ω_{d} ≦ (1/2) ω₁ the control force u(t) is given by the following equation:${\text{u(t) = G}}_{\text{1}} {\text{(dx}}_{\text{1}} {\text{/dt) + G}}_{\text{2}} {\text{(dx}}_{\text{d}} \text{/dt)}$ wherein G₁ is a gain in a circuit including an AGC circuit or the like against the response speed of the structure and attains the correspondences of large inputs through small inputs (wherein G₂ becomes a negative value). The second term in the above equation gives a damping property to the side of the additional mass body as well and attains a stability thereof by adding the product of a gain G₂ and a vibration speed on the side of the additional mass body to the control force.

There are some studies which try to add a spring having its spring constant k_{d} to the AMD described above in parallel with the control force due to the actuator as shown in the vibration model of Fig. 14 and to obtain a vibration control effect to a certain degree with the control force of the AMD by means of less control force in comparison with that of the AMD [designated as an ATMD (i.e., the abbreviation of Active Tuned Mass Damper) hereafter].

In an ATMD, a spring constant k_{d} is set so that the vibration of an additional mass body may synchronize with that of a structure, that is,${\text{ω}}_{\text{d}} {\text{= ω}}_{\text{1}}$ and the control force u(t) is, for example, given by the following equation,${\text{u(t) = G}}_{\text{1}} {\text{(dx}}_{\text{1}} {\text{/dt) + G}}_{\text{2}} {\text{(dx}}_{\text{d}} {\text{/dt) + G}}_{\text{3}} {\text{(x}}_{\text{1}} {\text{- x}}_{\text{d}} \text{)}$ wherein G₃ is a gain having a negative sign and cancels a part of the inertial force applying on the additional mass body at a vibration time due to the third term in the above equation, so that the additional mass body may be vibrated by a lower control force.

Furthermore, Japanese Pat. Publication No. JP-82-3-70075 discloses a vibration control device of an active type having a pattern for controlling the structural vibration due to earthquake or the like by connecting a second additional mass body having a mass less than the additional mass body of the DD to the additional mass body of the DD through a spring and an actuator,and by applying a control force on the second additional mass body from the actuator.

With reference to the control direction of each vibration control device described above, two kinds of following patterns can usually be considered depending on a supporting method for an additional mass body to a structure or how to give a spring:-

### (a) A case where only one vibration control device controls in all directions

For example, an additional mass body is vibrated in all the directions within a horizontal plane and it is possible to control in all directions by one vibration control device in case the additional mass body is supported by a laminated rubber support or a ball bearing or hung and supported by a hanger material by use of a universal joint or the like.

### (b) A case where one vibration control device controls only in one direction

For example, in case of connecting an additional mass body to a structure with a coil spring in a horizontal direction while supporting the additional mass body with a linear guide (straight rail or linear guide shaft or the like) or sliding the additional mass body along a circular track or in case of hanging and supporting the additional mass body with a hanger material, the vibration direction of the additional mass body is one-directional in a pattern how the vibration direction is restricted and only one directional control is possible.

For the purpose of obtaining a sufficient vibration control effect in the vibration control of structures, however, the additional mass body becomes large in weight and the influences given on the resulting design load and floor planning of the structure become large as well.

With reference to this problem, since one vibration control device can control in all directions (as a matter of course, a plurality of vibration control devices can also be used) in case of (a), there is an advantage in that there is no waste with respect to the mass of the additional mass body. On the contrary, there is a problem in that a mechanism for providing a control force and the control for the mechanism become complicated in case of applying an AMD or ATMD.

On the other hand, in case of (b), if it is desired to control in two directions within the horizontal plane of a structure (here, it is possible to control in all directions with respect to a horizontal displacement by the combination of two-directional controls), each vibration control device must be mounted separately in two directions, the additional mass body of the vibration control device in each separate direction does not function for the vibration control in a specific direction, and the space occupied by the vibration control device also becomes large while the weight of total additional mass bodies to the weight of the structure becomes larger by this part.

It would be desirable to solve the problems as described above in the vibration control devices of the prior art. It would also be desirable to be able to provide a vibration control device which can be operated by a small supply energy and a small control force, can effectively control the vibration of a structure against earthquake, and which has a simple control mechanism and limits the weight of an additional mass body and the installation space required.

Assuming an additional mass body in the basic constitution of a DD as a first additional mass body, a vibration control device of the present invention corresponds to what is added with a plurality of second additional mass bodies constituting AMD or ATMD to one first additional mass body. A vibration control device for a structure comprises a first additional mass body having a predetermined mass and movable relative to the structure; support means intervened between the structure and the first additional mass body so as to provide a period synchronizing with the natural period of the structure to the first additional mass body; a second additional mass body having a predetermined mass and movable relative to the first additional mass body; and drive means for applying a control force between the first and second additional mass bodies, wherein a plurality of second additional mass bodies movable relatively in a predetermined direction are provided to one first additional mass body in two or more directions.

In the vibration control device of the present invention, a vibration control effect can be obtained in all directions within a horizontal plane by use of one first additional mass body (the first additional mass body of each device in case a plurality of vibration control devices are provided) by making the first additional mass body, which is not directly connected to the drive means, vibratile (displaceable) in all directions within a horizontal plane.

As support means for making the first additional mass body vibratile in all directions within a horizontal plane, there may be means for suspending the first additional mass body by a hanger device using a universal joint or the like, some support means such as a laminated rubber support and a ball bearing support arranged to be spread on the roof or floor or the like of a structure, or linear guide supports combined in two directions (so that two-directional linear guides may be movable relative to each other).

With reference to the laminated rubber support as the support means, the laminated rubber support may be empty in its axial portion for the decrease in horizontal stiffness and for a longer period thereof, and a high damping rubber expected to have a large damping property in the rubber itself can also be utilized. A coil spring for connecting the structure to the first additional mass body in a horizontal direction is used in common for both together with the laminated rubber support. In case of the ball bearing support or the linear guide support, support means can also be constituted by combining the laminated rubber with the spring coil as a connection spring for securing a neutral position and for adjusting a spring constant thereof.

With reference to the second additional mass body for directly receiving a control force from the drive means, both a mechanism for the drive means and a control method are simplified by restricting a vibrational direction thereof to one direction, allowing to control efficiently and with high precision to the response or the like of the structure due to earthquake or the like. By providing such a plurality of second additional mass bodies in two directions (even three directions are possible) to one first additional mass body, ultimately two-directional control forces are indirectly given to the first additional mass body and the response of the structure can be controlled in all directions within a horizontal plane.

With reference to support means for making the second additional mass body vibratile in a specific direction within a horizontal plane, there may be means for suspending the second additional mass body so that the direction of vibration is restricted by a hanger device, for connecting the first additional mass body to the second additional mass body with a coil spring or the like while supporting the first and second additional mass bodies with a linear guide support, and for defining an arcuate track which is convex downwards on the upper surface or the like of the first additional mass body and allows the second additional mass body to vibrate on the circular track by potential energy and an inertial force.

With reference to drive means for applying a control force on the second additional mass body, for example, there are a drive device utilizing an electric motor, a hydraulic type drive device, and a linear motor or the like, which are controlled by the response of the structure due to the external force of the vibration by earthquake or wind or the like or on the basis of earthquake response analysis.

Adapting the constitution described above, the present invention has also some advantages in the following.
(a) By providing a plurality of second additional mass bodies in two directions to one first additional mass body, ultimately two-directional control forces are indirectly given to the first additional mass body, allowing the response of the structure to be controlled in all directions within a horizontal plane. Further, since the weight of the second additional mass body is very small in comparison with the weight of the first additional mass body, there are almost no influence on the increase in weight as a whole vibration control device, even though a plurality of second additional mass bodies may be provided.
(b) A large vibration control effect can be given by the drive having an extremely small mass body by adding the constitution of the AMD or ATMD having a driver to the DD, while assuming the DD as a basic construction.
(c) Since the weight of the second additional mass body to be driven is extremely small in comparison with the weight of the structure, the influences on the main body of the structure are extremely small, even though the driving portion may run away.

The foregoing and other objects and features of the invention will become apparent from the following description of preferred embodiments of the invention with reference to the accompanying drawings, in which:
Fig. 1 is a horizontal sectional view showing the outline of a vibration control device as a preferred embodiment of the present invention;
Fig. 2 is a vertical sectional view of Fig. 1;
Fig. 3 is a plan view showing a vibration control device as another preferred embodiment of the present invention;
Fig. 4 is a front view of Fig. 3;
Fig. 5 is a schematic view showing a combination pattern between support means and second support means in a vibration control device of the present invention as an embodiment;
Fig. 6 is a schematic view showing a combination pattern between support means and second support means as another embodiment;
Fig. 7 is a schematic view showing a combination pattern between support means and second support means as a further embodiment;
Fig. 8 is a schematic view showing a combination pattern between support means second support means as a still further embodiment;
Fig. 9 is a schematic view shown a combination pattern between support means and second support means as a yet further embodiment;
Fig. 10 is a schematic view showing a combination pattern between support means and second support means as a yet further embodiment;
Fig. 11 is a vibration model diagram showing a vibration control device of the present invention with respect to only one direction;
Fig. 12 is a vibration model diagram showing a DD of the prior art;
Fig. 13 is a vibration model diagram showing an AMD of the prior art; and
Fig. 14 is a vibration model diagram showing an ATMD of the prior art.

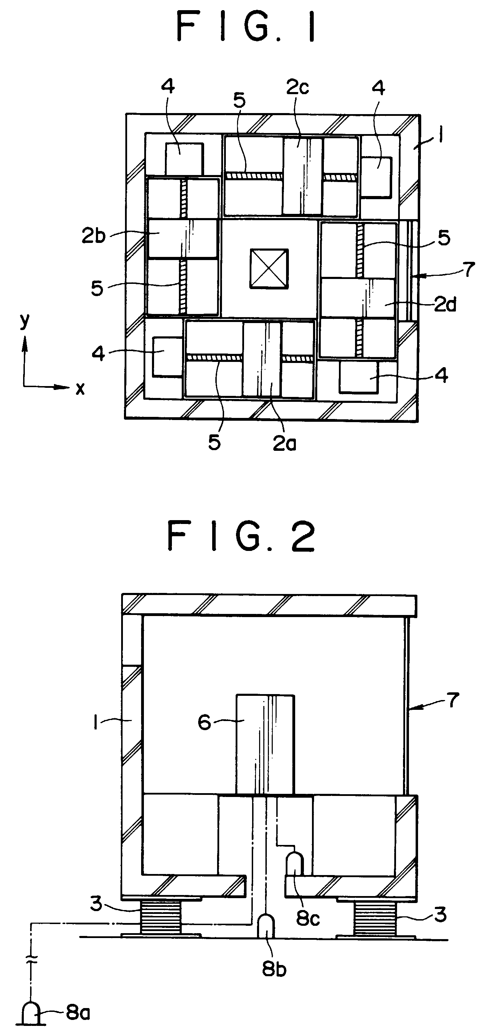

Figs. 1 and 2 show the outline of a vibration control device as a preferred embodiment of the present invention.

In this preferred embodiment, a first additional mass body 1 constituting a vibration control device forms a chamber, and four second additional mass bodies 2a, 2b, 2c, and 2d are incorporated into the interior of the first additional mass body 1, respectively.

The first additional mass body 1 is supported by a plurality of laminated rubber supports 3 as support means and can be vibrated in all directions within a horizontal plane thereof. Each laminated rubber support 3 is designed to the first additional mass body 1 so as to give a spring constant corresponding to the natural period of a structure. However, in case the natural period of the structure is largely different depending on a direction thereof (e.g., x-axial and y-axial directions illustrated in the Fig. 1 ), it is also possible to correspond the natural period of the structure to the spring constant by devising the sectional shape of each laminated rubber support 3 and a support method for the laminated rubber support. As a laminated rubber for each laminated rubber support 3, a high damping laminated rubber can also be used in common for a damper giving a predetermined damping coefficient to the laminated rubber support 3. However, an oil damper, a viscous damper, an elastoplastic damper or another appropriate damper may also be intervened between the structure and the first additional mass body 1, separately from each laminated rubber support 3.

As drive means, an AC servo motor 4 and a shaft 5 having a male screw constituting a ball screw are both provided to,each of the second additional mass bodies 2a, 2b, 2c,and 2d, which are driven by the rotation of the shaft 5 in the axial direction of the shaft 5. That is to say, the movement direction of each of the second additional mass bodies 2a, 2b, 2c,and 2d is restricted in the axial direction of the shaft 5, and two of the second additional mass bodies 2a and 2c are vibrated in the x-axial direction illustrated in the drawing, while the other two of the second additional mass bodies 2b and 2d are vibrated in the y-axial direction illustrated in the drawing.

In the present preferred embodiment, a control device 6 for controlling the drive of the second additional mass bodies 2a, 2b, 2c,and 2d, i.e., for controlling the control forces applied on these second additional mass bodies, is also accommodated in the interior of the first additional mass body 1, and further, an inspection port 7 is provided to secure a space in the interior for performing maintenance.

There are also some cases where a spring (not illustrated in the present preferred embodiment) such as a coil spring is provided in parallel with the shaft 5 so as to keep a neutral position to the second additional mass bodies 2a, 2b, 2c, and 2d as well or to obtain a predetermined vibration control effect by a small control force in similar to the case of the ATMD.

In the drawing, 8a indicates a sensor (vibrograph) for detecting any vibrations (seismic motion or the like) of the structure on the ground, 8b indicates a sensor for detecting the response of the structure at the position where a vibration control device is installed, and 8c indicates a sensor for detecting the vibration of the first additional mass body, respectively. Furthermore, each of the second additional mass bodies 2a, 2b, 2c,and 2d is installed with a sensor for detecting each vibration and can be controlled by the feed back of each detected value.

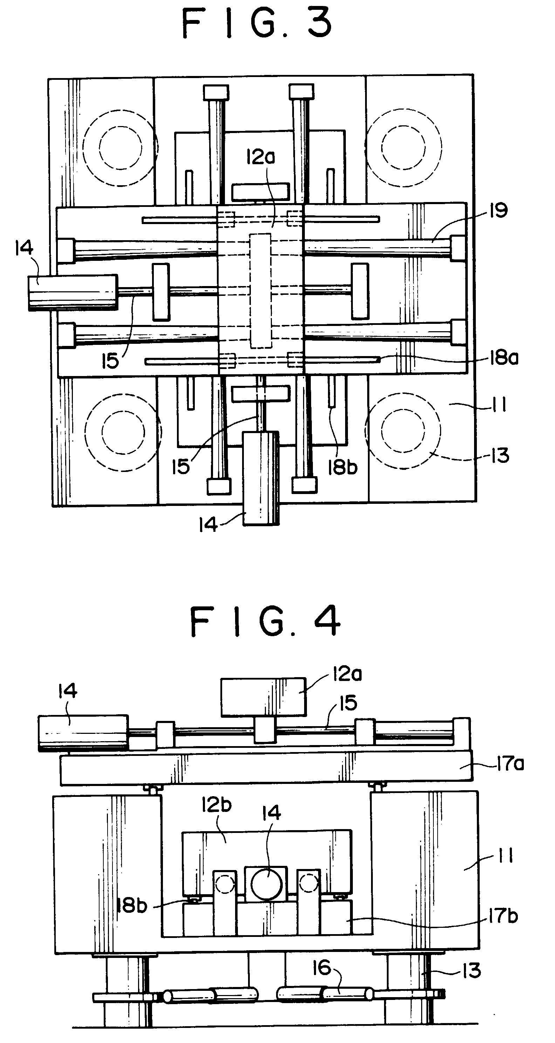

Figs. 3 and 4 show a vibration control device as another preferred embodiment of the present invention.

In the present preferred embodiment, a first additional mass body 11 with a channel shape in cross section made of a steel material or the like is supported by four laminated rubber supports 13, and the bottom center of the first additional mass body 11 is connected to each laminated rubber support 13 through a horizontally arranged damper 16 of a cylinder type, so that a predetermined damping property may be added.

In the present preferred embodiment, taking advantage of the channel shape in cross section of the first additional mass body 11, an x-directional second additional mass body 12a and a y-directional second additional mass body 12b are provided in a vertical direction not so as to interfere with each other.

Next will be explained the drive of the x-directional second additional mass body 12a. The second additional mass body 12a is slidable along two pieces of x-directional rails 18a mounted on a frame 17a, bridged over the upper portion of the first additional mass body 11, so that the second additional mass body is vibrated on the x-directional rails 18a by rotating a shaft 15 constituting a ball screw due to the control of an AC servo motor 14.

In the drawing, 19 indicates a horizontal coil spring provided in parallel with the shaft 15 to give a predetermined spring constant to the second additional mass body 12a. Simply for keeping the neutral position of the second additional mass body 12a, the spring constant usually provides a long period in comparison with the natural period of the structure. However, the spring constant is synchronized with the period of the first additional mass body 11 in case of applying an ATMD-like control.

Even with reference to the drive of the y-directional second additional mass body 12b, the basic constitution is same with the corresponding x-directional basic constitution, and the y-directional second additional mass body 12b slides on the y-directional rails 18b while being accommodated in the channel of the first additional mass body 11 through the frame 17b.

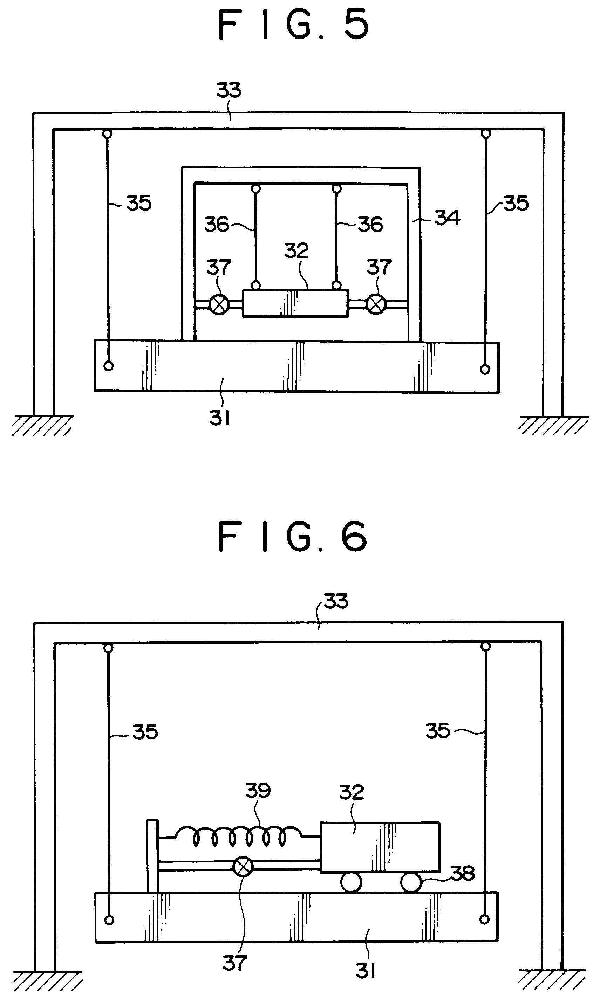

Figs. 5 through 10 show combination patterns between support means for allowing a first additional mass body 31 to vibrate in all directions within a horizontal plane and second support means for allowing a second additional mass body 32 to vibrate in a specific direction within a horizontal plane, respectively. For the simplification of explanation, the second additional mass body 32 is shown only in one direction. However, there are other combination patterns in two or more directions practically.

In an embodiment of Fig. 5, the first and second additional mass bodies 31 and 32 are hung and supported by hanger materials 35 and 36 to support frames 33 and 34, respectively, to bring into a form of giving a control force to the second additional mass body 32 by means of an actuator 37. The hanger support of the first additional mass body 31 is allowed to vibrate in all directions by, for example, providing a universal joint. The second additional mass body 32 may be vibrated only in one direction. However, the direction of vibration can also be restricted by the actuating direction of the actuator 37.

In an embodiment of Fig. 6, the hanger support of the first additional mass body 31 is similar to that in case of Fig. 4, and the second additional mass body 32 is arranged so as to slide on the first additional mass body 31 through a roller 38 or the like. The sliding direction thereof can be restricted by the rotational direction of the roller 38, the direction of a coil spring 39 to be connected to the second additional mass body 32,and the direction of the actuator 37, and it may also be good to use the pattern for the second additional mass body 32 to slide along the rail.

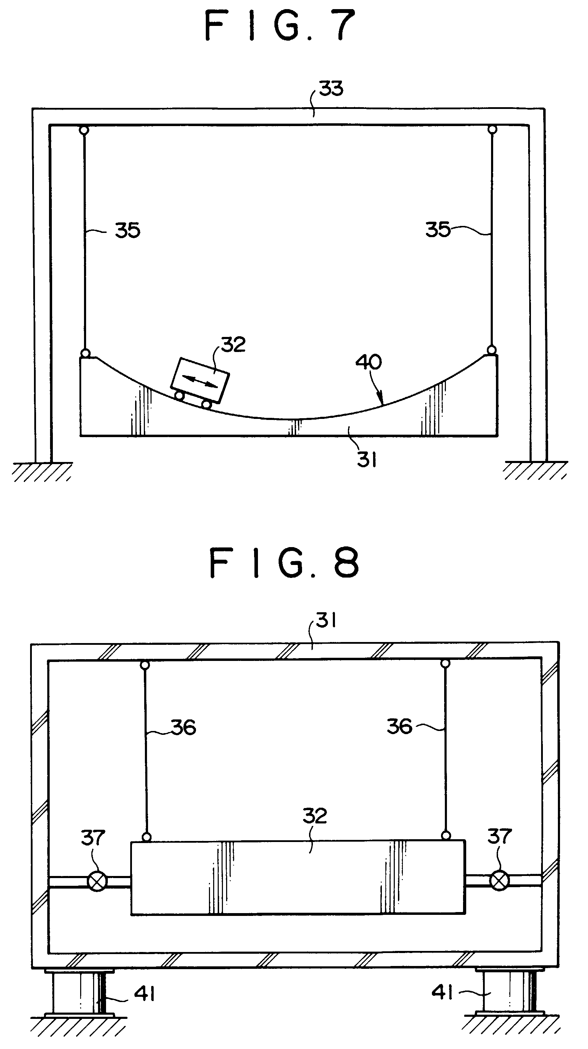

Even in an embodiment of Fig. 7, the hanger support of the first additional mass body 31 is similar to that in case of Fig. 4. An arcuate track 40 having a circular shape within a vertical plane on the upper surface of the first additional mass body 31 is formed so that the second additional mass body 32 may be vibrated within the circular track 40. As drive means for the second additional mass body 32, a linear motor or the like may be appropriate, .but is not particularly restricted. The circular shape of the track 40 depends on a control method, and there are one case of giving a period longer than the natural period of the structure (i.e., the case of increasing the radius of curvature) and the other case of giving a period synchronizing with the natural period of the structure. In order to prevent the mutual interference of the two-directional second additional mass bodies 32, the arrangement thereof may be planely deviated from each other (refer to the preferred embodiment in Figs. 1 and 2) or the tracks may be provided as a two-level crossing in a vertical direction (refer to the preferred embodiment in Figs. 3 and 4).

In an embodiment of Fig. 8, the first additional mass body 31 constituting a chamber is supported by laminated rubber supports 41, and the second additional mass body 32 is hung and supported by the hanger material 36 within the first additional mass body 31.

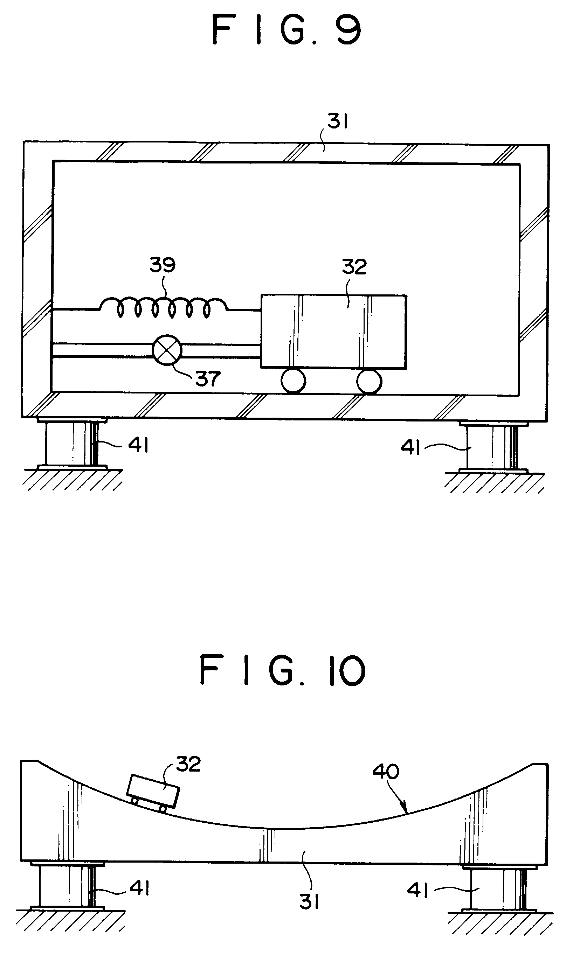

In an embodiment of Fig. 9, the first additional mass body 31 constituting a chamber is supported by the laminated rubber supports 41 in a similar manner so that the second additional mass body 32 may slide within the first additional mass body 31. The second additional mass body 32 is connected to the first additional mass body 31 through the coil spring 39 and the actuator 37.

In an embodiment of Fig. 10, the circular track 40, on which the second additional mass body travels, is formed on the upper surface of the first additional mass body 31 supported by the laminated rubber supports 41. The first additional mass body 31 may also constitute a chamber as shown in the embodiment of Figs. 8 and 9.

Fig. 11 illustrates a vibration control device of the present invention with respect to only one direction (x-axial direction) as a vibration model, and in case of assuming the additional mass body of the DD described in the section of the prior art as a first additional mass body, it corresponds to what combines the first additional mass body with the second additional mass body constituting the AMD or ATMD.

In Fig. 11, m₁ indicates a mass of a structure constituting a main vibration system, mₐ indicates a mass of a first additional mass body, and m_{bx} indicates a mass of a second additional mass body functionating in the x-axial direction, respectively. Further, k₁ₓ indicates a spring constant in the x-axial direction of the main body of the structure, kₐₓ indicates a spring constant of support means in the x-axial direction, cₐₓ indicates a damping coefficient of the support means in the x-axial direction, k_{bx} indicates a spring constant between the first additional mass body and the second additional mass body functioning in the x-axial direction, and u(t)ₓ indicates a control force in the x-axial direction, respectively. Furthermore, x₁ indicates a displacement of the structure, xₐ indicates a displacement of the first additional mass body and x_{b} indicates a displacement of the second additional mass body, respectively. In addition, a vibration control device of the present invention includes a second additional mass body having a mass m_{by} functioning in the y-axial direction (normally a direction perpendicular to the x-axial direction, but selectable according to the sectional shape of the structure), so that it may be possible to control in all directions within a horizontal plane by controlling in the x-axial and y-axial directions, respectively.

Next will be explained one embodiment of the control method in the following. Since it is possible to control in all directions within a horizontal plane by controlling in the x-axial and y-axial directions respectively as described above, the explanation of an embodiment only in the x-axial direction will be given in the following.

The mass of the first additional mass body is assumed as approximately 1/50 through 1/1000 of the mass of the structure, e.g., in accordance with the scale of the structure, vibration characteristics,and control means. The mass of the second additional mass body is also assumed as approximately 1/10 through 1/100 of the mass of the first additional mass body, e.g.

By use of the parameters shown in Fig. 10, the angular frequencies ω₁ₓ, ωₐₓ, and ω_{bx} of a main vibration system and the first and second additional mass bodies are represented by the following:${\text{ω}}_{\text{1x}} {\text{= (k}}_{\text{1x}} {\text{/m}}_{\text{1}} {\text{)}}^{\text{1/2}}$${\text{ω}}_{\text{ax}} {\text{= (k}}_{\text{ax}} {\text{/m}}_{\text{a}} {\text{)}}^{\text{1/2}}$${\text{ω}}_{\text{bx}} {\text{= (k}}_{\text{bx}} {\text{/m}}_{\text{b}} {\text{)}}^{\text{1/2}}$

By synchronizing the angular frequencies with one another, the following relation can be established:${\text{ω}}_{\text{1x}} {\text{≒ ω}}_{\text{ax}} {\text{≒ ω}}_{\text{bx}}$

There are, however, some cases of applying a conventional AMD-like control by setting ω_{bx} as a sufficiently small value in comparison with those of ω₁ₓ and ωₐₓ without synchronizing with one another.

Furthermore, the relationship among the mass of the structure, the mass of the first additional mass body and the mass of the second additional mass body as described above can be represented by:${\text{m}}_{\text{a}} {\text{/m}}_{\text{1}} \text{= 1/50 through 1/1000}$${\text{m}}_{\text{bx}} {\text{/m}}_{\text{a}} \text{= 1/10 through 1/100}$

A control force for controlling the movement of a driver as the second additional mass body is defined by the following equation, e.g.,${\text{u(t)}}_{\text{x}} {\text{= G}}_{\text{1}} {\text{(d}}_{\text{x1}} {\text{/dt) + G}}_{\text{2}} {\text{(x}}_{\text{a}} {\text{- x}}_{\text{1}} \text{)} {\text{+ G}}_{\text{3}} {\text{(d}}_{\text{xb}} {\text{/ dt ) + G}}_{\text{4}} {\text{(x}}_{\text{b}} {\text{- x}}_{\text{a}} \text{)}$ wherein each of G₁, G₂, G₃,and G₄ is a gain in each term of the above equation ( 1 ), respectively.

Energy is mainly consumed by a damper function (damping coefficient cₐₓ) relative to the first additional mass body.

Since the angular frequency ωₐₓ of the first additional mass body is synchronized with the angular frequency ω₁ₓ of the main vibration system, it forms a dynamic damper (dynamic vibration reducer). It is, however, desirable to slightly increase the damping coefficient cₐₓ to the first additional mass body in comparison with the optimum design value of the dynamic damper.

Then, the control force u(t)ₓ is applied so that the first additional mass body (mass mₐ) is vibrated. In case of the above equation (1), the speed (dₓ₁/dt) of the structure is fed back, and the first additional mass body (mass mₐ) can amplify the motion of a normal DD (dynamic damper), resulting in the increase in vibration control effect.

The reaction force from the control force u(t)ₓ is treated by use of the inertial force from the second additional mass body (mass m_{bx} = 1/10 mₐ through 1/100 mₐ).

The third term in the above equation (1) is available for providing a damping property to the second additional mass body as well by use of the relationship of action and reaction, and the vibration stabilization for the second additional mass body can be attained.

Furthermore, the spring force (spring constant k_{bx}) absorbs the greater part of the force needed to control when the angular frequency ω_{bx} of the second additional mass body is also synchronized with the angular frequency ω₁ₓ of the main vibration system by use of the principle of the ATMD described above, and therefore, the necessary force for the control becomes further smaller.

Namely, a control force [u(t)ₓ], an inertial force [m_{bx} (d_{xb}/dt)²], and a spring force [k_{bx} (x_{b} - xₐ)] act on the second additional mass body, and the following relation is given by:$\text{(Control Force) + (Inertial Force) + (Spring Force) = 0}$

Therefore, the inertial force and the spring force cancel with each other, so that the control force can be made smaller.

## Claims

1. A vibration control device for a structure, comprising:
a first additional mass body (1;11;31) having a predetermined mass and movable relative to the structure;
support means (3;13;33;35;41) for supporting the first additional mass body (1;11;31) relative to the structure to provide the first additional mass body with a period which synchronizes with the natural period of the structure;
a second additional mass body (2a;12a;32) having a predetermined mass and movable relative to the first additional mass body (1;3;31); and
drive means (4;14;37) for applying a control force between the first and second additional mass bodies;
characterised in that a plurality of second additional mass bodies (2a-d; 12a,b; 32) each movable relatively in a predetermined direction are provided in association with one first additional mass body (1;11;31) in two or more directions.

2. A vibration control device as claimed in claim 1, wherein the support means comprises hanging means (35) for suspending and supporting the first additional mass body (31) relative to the structure.

3. A vibration control device as claimed in claim 1, wherein the support means comprises a plurality of laminated rubber supports (3;13;41).

4. A vibration control device as claimed in claim 1, wherein the support means comprises a plurality of ball bearing supports and spring means for connecting the structure to the first additional mass body.

5. A vibration control device as claimed in claim 1, wherein the support means comprises a plurality of linear guide supports and spring means for connecting the structure to the first additional mass body.

6. A vibration control device as claimed in any preceding claim, including second support means (34;36;38;39;40) for giving a predetermined period to each second additional mass body (32), provided between the first and second additional mass bodies (31,32) together with said drive means.

7. A vibration control device as claimed in claim 6, wherein the second support means comprises hanging means (36) for suspending and supporting the second additional mass body (32) relative to the first additional mass body (31).

8. A vibration control device as claimed in claim 6, wherein the second support means comprises a linear guide support for supporting the second additional mass body (32) relative to the first additional mass body (31) and a coil spring (39) for connecting the first additional mass body (31) to the second additional mass body (32).

9. A vibration control device as claimed in claim 6, wherein the second support means comprises an arcuate track (40) which is convex downwards, provided on the first additional mass body (31).

10. A vibration control device as claimed in any of claims 6 to 9, wherein the said predetermined period synchronizes with the period of the first additional mass body (31).

## Patentansprüche

1. Schwingungskontrollvorrichtung für eine Konstruktion, die aufweist:
einen ersten zusätzlichen Massekörper (1; 11; 31). der eine vorgegebene Masse aufweist und relativ zur Konstruktion beweglich ist;
eine Haltevorrichtung (3; 13; 33; 35; 41) für das Halten des ersten zusätzlichen Massekörpers (1; 11; 31) relativ zur Konstruktion, um einen ersten zusätzlichen Massekörper mit einer Periode zur Verfügung zu stellen, die sich mit der Periode der Eigenschwingung der Konstruktion synchronisiert;
einen zweiten zusätzlichen Massekörper (2a; 12a; 32). der eine vorgegebene Masse aufweist und relativ zum ersten zusätzlichen Massekörper (1; 3; 31) beweglich ist; und
eine Antriebsvorrichtung (4; 14; 37) für das Anwenden einer Steuerungskraft zwischen dem ersten und dem zweiten zusätzlichen Massekörper;
dadurch gekennzeichnet, daß eine Vielzahl von zweiten zusätzlichen Massekörpern (2a-d; 12a,b; 32), die jeweils relativ in einer vorgegebenen Richtung beweglich sind, in Verbindung mit einem ersten zusätzlichen Massekörper (1; 11; 31) in zwei oder mehreren Richtungen bereitgestellt wird.

2. Schwingungskontrollvorrichtung nach Anspruch 1, bei der die Haltevorrichtung eine Aufhängung (35) für das Aufhängen und Halten des ersten zusätzlichen Massekörpers (31) relativ zur Konstruktion aufweist.

3. Schwingungskontrollvorrichtung nach Anspruch 1, bei der die Haltevorrichtung eine Vielzahl von mehrschichtigen Gummihalterungen (3; 13; 41) aufweist.

4. Schwingungskontrollvorrichtung nach Anspruch 1, bei der die Haltevorrichtung eine Vielzahl von Kugellagerhalterungen und eine Federeinrichtung für das Verbinden der Konstruktion mit dem ersten zusätzlichen Massekörper aufweist.

5. Schwingungskontrollvorrichtung nach Anspruch 1. bei der die Haltevorrichtung eine Vielzahl von linearen Führungshalterungen und eine Federeinrichtung für das Verbinden der Konstruktion mit dem ersten zusätzlichen Massekörper aufweist.

6. Schwingungskontrollvorrichtung nach einem der vorhergehenden Ansprüche, die umfaßt: eine zweite Haltevorrichtung (34; 36; 38; 39; 40) für die Bereitstellung einer vorgegebenen Periode für jeden zweiten zusätzlichen Massekörper (32). die zwischen dem ersten und dem zweiten zusätzlichen Massekörper (31, 32) angeordnet ist. zusammen mit der Antriebsvorrichtung.

7. Schwingungskontrollvorrichtung nach Anspruch 6, bei der die zweite Haltevorrichtung eine Aufhängung (36) für das Aufhängen und Halten des zweiten zusätzlichen Massekörpers (32) relativ zum ersten zusätzlichen Massekörper (31) aufweist.

8. Schwingungskontrollvorrichtung nach Anspruch 6. bei der die zweite Haltevorrichtung aufweist: eine lineare Führungshalterung für das Halten des zweiten zusätzlichen Massekörpers (32) relativ zum ersten zusätzlichen Massekörper (31). und eine Spiralfeder (39) für das Verbinden des ersten zusätzlichen Massekörpers (31) mit dem zweiten zusätzlichen Massekörper (32).

9. Schwingungskontrollvorrichtung nach Anspruch 6, bei der die zweite Haltevorrichtung eine bogenförmige Bahn (40) aufweist, die nach unten konvex und am ersten zusätzlichen Massekörper (31) angeordnet ist.

10. Schwingungskontrollvorrichtung nach einem der Ansprüche 6 bis 9, bei der sich die vorgegebene Periode mit der Periode des ersten zusätzlichen Massekörpers (31) synchronisiert.

## Revendications

1. Dispositif de contrôle des vibrations pour une structure, comprenant:
un premier corps de masse additionnel (1; 11: 31) ayant une masse prédéterminée et pouvant se déplacer par rapport à la structure ;
un moyen de support (3: 13; 33; 35: 41) pour supporter le premier corps de masse additionnel (1; 11; 31) par rapport à la structure pour conférer au premier corps de masse additionnel une période en synchronisme avec la période naturelle de la structure;
un deuxième corps de masse additionnel (2a: 12a; 32) ayant une masse prédéterminée et pouvant se déplacer par rapport au premier corps de masse additionnel (1; 3; 31); et
un moyen d'actionnement (4; 14; 37) pour appliquer une force de contrôle entre les premier et deuxième corps de masse additionnels;
caractérisé en ce qu'il existe plusieurs deuxièmes corps de masse additionnels (2a-d; 12a,b; 32) pouvant se déplacer chacun par rapport à une direction prédéterminée en association avec un premier corps de masse additionnel (1; 11; 31) dans deux ou plusieurs directions.

2. Dispositif de contrôle des vibrations selon la revendication 1, dans lequel le moyen de support comprend un moyen de suspension (35) pour suspendre et supporter le premier corps de masse additionnel (31) par rapport à la structure.

3. Dispositif de contrôle des vibrations selon la revendication 1, dans lequel le moyen de support comprend plusieurs supports stratifiés en caoutchouc (3; 13; 41).

4. Dispositif de contrôle des vibrations selon la revendication 1, dans lequel le moyen de support comprend plusieurs supports à palier à billes et des moyens élastiques pour connecter la structure au premier corps de masse additionnel.

5. Dispositif de contrôle des vibrations selon la revendication 1, dans lequel le moyen de support comprend plusieurs supports de guidage linéaire et plusieurs moyens élastiques pour connecter la structure au premier corps de masse additionnel.

6. Dispositif de contrôle des vibrations selon l'une quelconque des revendications précédentes, comprenant un deuxième moyen de support (34; 36; 38; 39; 40) pour conférer une période prédéterminée à chacun des deuxièmes corps de masse additionnels (32). prévus entre les premier et deuxième corps de masse additionnels (31, 32) grâce audit moyen d'actionnement.

7. Dispositif de contrôle des vibrations selon la revendication 6, dans lequel le deuxième moyen de support comprend un moyen de suspension (36) pour suspendre et supporter le deuxième corps de masse additionnel (32) par rapport au premier corps de masse additionnel (31).

8. Dispositif de contrôle des vibrations selon la revendication 6, dans lequel le deuxième moyen de support comprend un support de guidage linéaire pour supporter le deuxième corps de masse additionnel (32) par rapport au premier corps de masse additionnel (31) et un ressort hélicoïdal (39) pour connecter le premier corps de masse additionnel (31) au deuxième corps de masse additionnel (32).

9. Dispositif de contrôle des vibrations selon la revendication 6 dans lequel le deuxième moyen de support comprend une piste incurvée (40) qui est convexe vers le bas et qui est disposée sur le premier corps de masse additionnel (31).

10. Dispositif de contrôle des vibrations selon l'une quelconque des revendications 6 à 9, dans lequel ladite période prédéterminée est en synchronisme avec la période du premier corps de masse additionnel (31).
